# FASCICULE DE BREVET EUROPEEN

(11) **EP 0 810 347 B1**
(45) Date de publication et mention de la délivrance du brevet: **02.07.2003**
(21) Numéro de dépôt: 97810310.9
(22) Date de dépôt: 21.05.1997
(51) Int. Cl.: E06B 9/72, F16D 67/00

(54) **Réducteur avec accouplement de Oldham**
Untersetzungsgetriebe mit Oldham-Kupplung
Reduction gearing with oldham coupling

(30) Priorité: 28.05.1996 FR 9606552
(43) Date de publication de la demande: 03.12.1997
(73) Titulaire: SOMFY, 74300 Cluses (FR)
(72) Inventeur: Lagarde, Eric Paul, 74700 Sallanches (FR); Lemarchand, Philippe Marc, 74440 Taninges (FR)
(74) Mandataire: Meylan, Robert Maurice

(56) Documents cités:
- EP-A- 0 163 927
- DE-A- 3 510 549
- US-A- 4 848 433

## Description

L'invention a pour objet un réducteur associé à un dispositif anti-retour et à un accouplement de Oldham et comprenant un carter cylindrique contenant au moins un étage de réduction à planétaire logé dans un carter cylindrique.

Ce réducteur est particulièrement destiné à l'entraînement motorisé ou manuel d'un store ou volet roulant.

On connaît un ensemble constitué d'un moteur, d'un réducteur, d'un dispositif de freinage et d'un accouplement de Oldham mis bout à bout. La manipulation de cet ensemble est rendue peu commode en raison du fait que les composants de l'accouplement de Oldham ne sont pas retenus mécaniquement au réducteur et risquent donc de se séparer de celui-ci et de tomber lors des manipulations. Pour pallier ce risque, il est dès lors conseillé de munir les composants de l'accouplement de Oldham de graisse assurant une adhérence suffisante pour empêcher la séparation de ces composants. Lors du fonctionnement du réducteur, cette graisse est toutefois inutile et même gênante dans le cas de composants en matière plastique, ce qui est de plus en plus le cas aujourd'hui.

L'invention a pour but d'éviter de devoir recourir à un tel expédient et de réaliser une véritable intégration de l'accouplement de Oldham et du dispositif anti-retour au réducteur de manière à obtenir un composant présentant une commodité optimale en ce qui concerne sa manipulation et son montage dans un ensemble.

L'invention a également pour but de réduire l'encombrement d'un tel composant.

A cet effet, le réducteur selon l'invention est caractérisé en ce que le mobile de sortie du dernier étage de réduction est constitué d'une première pièce en forme de cloche cylindrique dont la paroi cylindrique présente une interruption et dans laquelle est emboîtée une seconde pièce en forme de cloche présentant, extérieurement, une partie radialement saillante engagée dans l'interruption de la première pièce en forme de cloche pour son entraînement en rotation et, intérieurement, une rainure diamétrale dans laquelle est engagé l'un des côtés de la croix de Oldham, cette croix de Oldham étant entièrement logée à l'intérieur des deux pièces en forme de cloche, en ce que le dispositif anti-retour est constitué d'un ressort hélicoïdal, connu en soi, entourant la première pièce et dont les extrémités sont accrochées sur chacun des bords de ladite interruption, et en ce que les deux pièces en forme de cloche sont situées à l'intérieur du carter cylindrique du réducteur et que les deux pièces en forme de cloche, ainsi que la pièce de sortie de l'accouplement de Oldham sont retenues axialement dans ledit carter par une bague de retenue fixée à l'extrémité dudit carter, le freinage anti-retour étant assuré par l'application du ressort contre le carter.

La croix de l'accouplement de Oldham est ainsi entièrement située à l'intérieur du dispositif anti-retour, ce qui amène une réduction sensible de la longueur de l'ensemble sans augmentation de son diamètre étant donné que ce diamètre est déterminé par le diamètre des porte-satellites du réducteur.

Le réducteur se présente sous la forme d'un cylindre muni à l'une de ses extrémités de la bague de retenue axiale. Ce cylindre constitue un composant parfaitement intégré dont la manipulation est très commode.

La bague de retenue, de préférence simplement fixée à cran dans le carter du réducteur, est avantageusement utilisée pour la fixation, à cran, d'une pièce d'adaptation pour le montage du réducteur dans le caisson d'un store, en particulier d'un store vénitien.

Le dessin annexé représente, à titre d'exemple, un mode d'exécution de l'invention.
La figure 1 est une vue en perspective du réducteur.
La figure 2 est une vue en coupe axiale du réducteur.
La figure 3 est une vue en coupe radiale selon III-III de la figure 2.

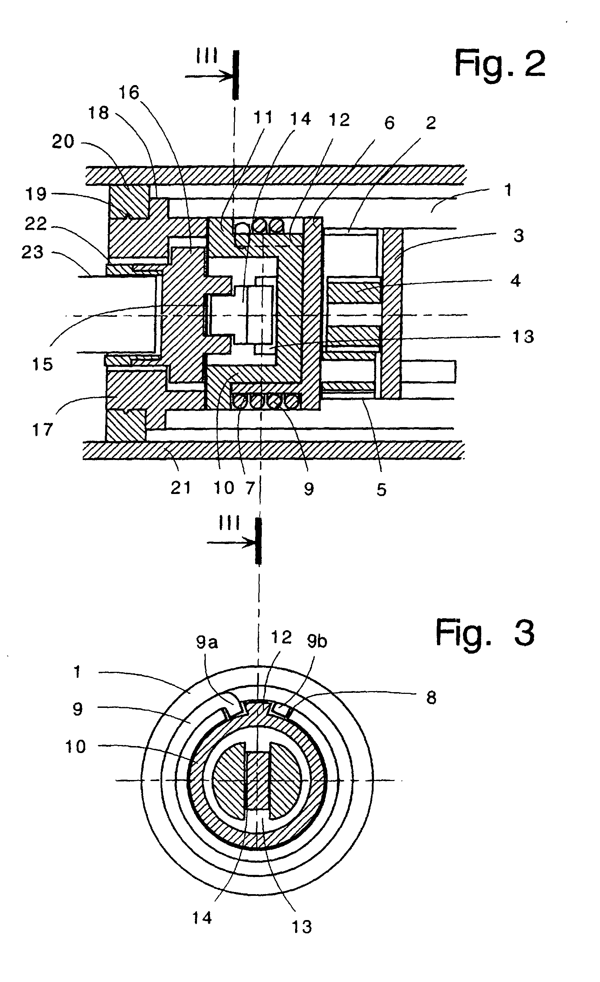

Le réducteur proprement dit est un réducteur à trois étages constitué d'un carter cylindrique 1 fermé côté entrée du réducteur et sur la paroi intérieure duquel est formée une couronne 2. A la figure 2, on reconnaît le porte-satellites 3 du deuxième étage solidaire du troisième planétaire 4 entraînant trois satellites 5 portés par un porte-satellites 6. Les satellites engrènent avec la couronne 2. Le porte-satellites 6 fait partie d'une pièce 7 en forme de cloche cylindrique 13 présentant une interruption 8. Sur cette pièce 12 est enroulé un ressort hélicoïdal 9 dont les extrémités coudées 9a et 9b sont accrochées sur chacun des bords de l'interruption 8. Dans la pièce 7 est engagée une seconde pièce en forme de cloche 10 dont le manteau cylindrique est emboîté dans la pièce 7 et dont le bord est muni d'un flasque annulaire 11 de même diamètre que le porte-satellites 6. La pièce 10 présente une saillie radiale 12 engagée dans l'interruption 8 entre les extrémités 9a et 9 du ressort 9. Les pièces 7 et 10, le ressort 9 et le carter 1 constituent un dispositif anti-retour connu en soi, décrit par exemple dans le brevet DE 35 04 489. Pour un certain sens de rotation, le diamètre du ressort 9 diminue permettant la libre rotation du dispositif à l'intérieur du carter 1, tandis que dans l'autre sens de rotation le diamètre du ressort 9 augmente et celui-ci est plaqué contre le carter 1, de telle sorte que la pièce 10 est freinée.

La pièce 10 constitue également la pièce d'entrée de l'accouplement de Oldham. A cet effet, le fond de la pièce 10 présente une rainure diamétrale 13 constituant la glissière d'entrée pour une croix de Oldham 14. L'autre glissière 15 est formée dans une pièce de sortie 16 présentant, sur sa face opposée, un creux 24 de forme hexagonale. La croix de Oldham 14 est entièrement située à l'intérieur de la pièce 10, cette dernière étant elle-même entièrement à l'intérieur du carter 1. L'ensemble des pièces du réducteur du frein et de l'accouplement de Oldham est retenu axialement dans le carter 1 par une bague 17 muni d'un bourrelet annulaire 18 par lequel elle est fixée à cran dans une gorge du carter 1. La bague de retenue 17 est en outre verrouillée en rotation dans le carter 1. Du côté extérieur, la bague de retenue 17 présente un second bourrelet annulaire 19 destiné à la fixation à cran d'une pièce d'adaptation 20 pour le montage du réducteur dans un caisson 21 d'un store, en particulier un store vénitien. La pièce de sortie 16 de l'accouplement de Oldham peut recevoir un adaptateur 22 si la section de l'arbre à entraîner 23 ne correspond pas à la section 24. Comme on peut le voir à la figure 2, cet adaptateur est entièrement logé à l'intérieur de la bague de retenue 17.

L'autre extrémité du carter 1 présente deux pattes 25 destinées à la fixation du réducteur à un moteur et le fond du carter est muni d'un flasque métallique servant de palier au planétaire d'entrée.

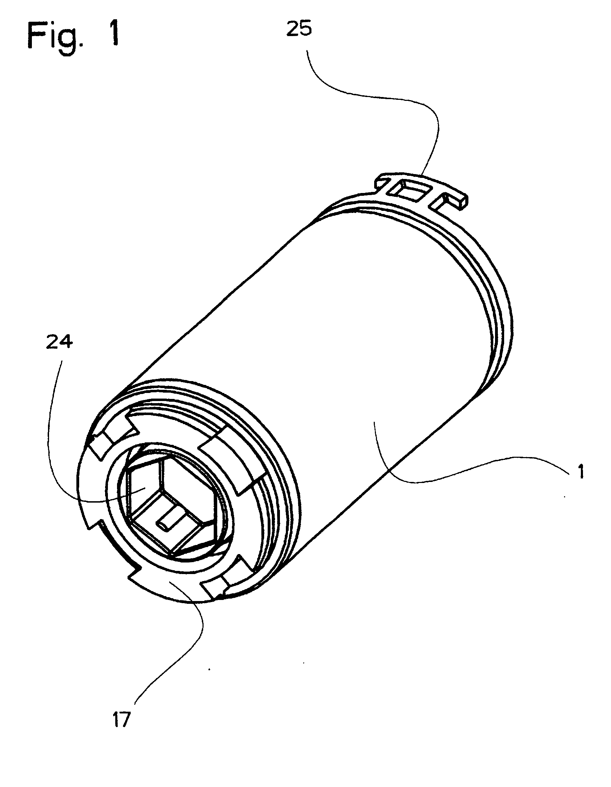

Comme le montre la figure 1, le réducteur et ses éléments associés forment une unité parfaitement intégrée se présentant sous la forme d'un cylindre. Dans un mode de réalisation, ce cylindre représente un diamètre extérieur de 23 mm seulement. Ce composant peut être accouplé à un moteur ou à un entraînement manuel. Dans le second cas, le réducteur ne comportera généralement qu'un seul étage de réduction.

## Revendications

1. Réducteur associé à un dispositif anti-retour (1, 7, 9, 10) et à un accouplement de Oldham (14) et comprenant au moins un étage de réduction à planétaire (3 à 6), logé dans un carter cylindrique (1), **caractérisé en ce que** le mobile de sortie du dernier étage de réduction est consitué d'une première pièce en forme de cloche cylindrique (7) dont la paroi cylindrique présente une interruption (8) et dans laquelle est emboîtée une seconde pièce en forme de cloche (10) présentant, extérieurement, une partie radialement saillante (12) engagée dans l'interruption de la première pièce en forme de cloche pour son entraînement en rotation et, intérieurement, une rainure diamétrale (13) dans laquelle est engagé l'un des côtés de la croix de Oldham (14), cette croix de Oldham étant entièrement logée à l'intérieur des deux pièces en forme de cloche, **en ce que** le dispositif anti-retour est constitué d'un ressort hélicoïdal (9) entourant la première pièce en forme de cloche (7) et dont les extrémités (9, 9b) sont accrochées sur chacun des bords de ladite interruption (8) et **en ce que** les deux pièces en forme de cloche (7, 10) sont situées à l'intérieur du carter cylindrique (1) du réducteur et que les deux pièces en forme de cloche, ainsi que la pièce de sortie (16) de l'accouplement de Oldham sont retenues axialement dans ledit carter par une bague de retenue (17) fixée à l'extrémité dudit carter, le freinage anti-retour étant assuré par l'application du ressort (9) contre le carter.

2. Réducteur selon la revendication 1 équipé d'une pièce d'adaptation (20) pour le montage du réducteur dans un caisson (21), **caractérisé en ce que** cette pièce d'adaptation est fixée sur la bague de retenue.

3. Réducteur selon la revendication 1 ou 2 équipé d'une pièce d'adaptation (22) de la sortie de l'accouplement de Oldham à un arbre, **caractérisé en ce que** cette pièce d'adaptation est entièrement logée dans la bague de retenue (17).

## Patentansprüche

1. Untersetzungsgetriebe, das einer Rückdrehsicherungsvorrichtung (1, 7, 9, 10) und einer Oldham-Kupplung (14) zugeordnet ist, mit wenigstens einer Planeten-Untersetzungsstufe (3 - 6), die in einem zylindrischen Gehäuse (1) untergebracht ist, **dadurch gekennzeichnet, dass** das bewegliche Ausgangsteil der letzten Untersetzungsstufe aus einem ersten Stück in Form einer zylindrischen Glocke (7) besteht, deren zylindrische Wand eine Unterbrechung (8) hat und in welche ein zweites Stück in Form einer Glocke (10) eingepasst ist, welche aussen einen radialen Vorsprung (12) hat, der in die Unterbrechung des ersten glockenförmigen Stücks eingreift, so dass es in Drehung versetzt wird, und innen eine diametrale Nut (13) aufweist, in die eine der Seiten des Oldham-Kreuzes (14) eingreift, welches vollständig im Inneren der beiden glockenförmigen Stücke untergebracht ist, dass die Rückdrehsicherungsvorrichtung aus einer Schraubenfeder (9) besteht, die das erste Stück in Form einer Glocke (7) umgibt und deren Enden (9a, 9b) an jedem der Ränder der erwähnten Unterbrechung (8) eingehakt sind, und dass die beiden Stücke in Form einer Glocke (7, 8) im Inneren des zylindrischen Gehäuses (1) des Untersetzungsgetriebes angeordnet sind und, ebenso wie das Ausgangsteil (16) der Oldham-Kupplung, axial im erwähnten Gehäuse durch einen Haltering (17) gehalten werden, der am Ende des erwähnten Gehäuses befestigt ist, wobei die Rückdreh-Bremsung durch die Anlage der Feder (9) am Gehäuse gewährleistet wird.

2. Untersetzungsgetriebe nach Anspruch 1, welches mit einem Adaptionsstück (20) zur Montage des Untersetzungsgetriebes in einem Kasten (21) ausgerüstet ist, **dadurch gekennzeichnet, dass** dieses Adaptionsstück auf dem Haltering befestigt ist.

3. Untersetzungsgetriebe nach Anspruch 1 oder 2, das mit einem Adaptionsstück (22) zum Anpassen des Ausgangs der Oldham-Kupplung an eine Welle ausgerüstet ist, **dadurch gekennzeichnet, dass** dieses Adaptionsstück vollständig innerhalb des Halterings untergebracht ist.

## Claims

1. Reducer associated with a nonreturn device (1, 7, 9, 10) and with an Oldham coupling (14) and comprising at least one planetary reduction stage (3 to 6) seated in a cylindrical casing (1), **characterized in that** the movable output member of the last reduction stage consists of a first piece in the form of a cylindrical bell (7), the cylindrical wall of which has an interruption (8) and into which is fitted a second bell-shaped piece (10) having externally a radially projecting part (12) engaged in the interruption of the first bell-shaped piece, for driving it in rotation, and internally a diametral groove (13), in which one of the sides of the Oldham cross (14) is engaged, this Oldham cross being seated entirely within the two bell-shaped pieces, **in that** the nonreturn device consists of a helical spring (9) which surrounds the first bell-shaped piece (7) and the ends (9a, 9b) of which are attached to each of the edges of said interruption (8), and **in that** the two bell-shaped pieces (7, 10) are located within the cylindrical casing (1) of the reducer, and the two bell-shaped pieces as well as the output member (16) of the Oldham coupling are retained axially in said casing by a retaining ring (17) fastened to the end of said casing, nonreturn braking being ensured by the laying of the spring (9) against the casing.

2. Reducer as claimed in claim 1, equipped with an adapter piece (20) for mounting the reducer in a frame (21), **characterized in that** this adapter piece is fastened to the retaining ring.

3. Reducer as claimed in claim 1 or 2, equipped with an adapter piece (22) from the output of the Oldham coupling to a shaft, **characterized in that** this adapter piece is seated entirely in the retaining ring (17) .
